# EUROPEAN PATENT APPLICATION

(11) **EP 4 550 086 A1**
(43) Date of publication of application: **07.05.2025**
(21) Application number: 24197560.6
(22) Date of filing: 30.08.2024
(51) Int. Cl.: G06F 1/3203, G06F 1/3212, G06F 1/3234, G06F 1/3287, G06F 1/26, G06F 1/3206

(54) **INFORMATION PROCESSING APPARATUS AND CONTROL METHOD**

(30) Priority: 30.10.2023 JP 2023185952
(71) Applicant: Lenovo (Singapore) Pte. Ltd., Singapore 556741 (SG)
(72) Inventor: MAKI, Koutaroh, Yokohama-shi, 220-0012 (JP); OHSAWA, Osamu, Yokohama-shi, 220-0012 (JP)
(74) Representative: Openshaw & Co.

(57) **Abstract**

Provided are an information processing apparatus and a control method capable of increasing an opportunity to use a battery when there is a margin of a battery remaining capacity.

A power supply circuit is configured to supply power supplied from an external power source or a battery to a computer system, and the computer system is configured to switch a system state among a normal state, a first low power state in which power consumption is lower than power consumption in the normal state, and a second low power state in which power consumption is lower than the power consumption in the first low power state. The computer system is configured to determine a setting value for a decrease in remaining capacity such that the setting value increases as the remaining capacity of the battery increases when starting the first low power state, and to change the system state to the second low power state when the first low power state continues until a decrease amount from the remaining capacity at the start of the first low power state reaches the setting value.

## Description

### BACKGROUND OF THE INVENTION

### Field of the Invention

The present invention relates to an information processing apparatus and a control method.

### Description of the Related Art

In recent years, the way information processing apparatuses such as personal computers (PCs) are used has been changing. For example, when an employee performs work for business purposes, the employee generally uses a PC installed in an office. However, with spread of remote work or hybrid work, PCs are increasingly being used in a variety of places such as a home, a rental office, a restaurant, and public transportation. Accordingly, time zones during which PCs are used are diversified, and it is becoming common for the usage not to be limited to predetermined working hours.

The information processing apparatuses are not always used in environments where a commercial power source is available, and may consume power stored in a battery in advance. In order to maintain a state in which the apparatus is capable of being continuously used for a long time, a decrease in power consumption is expected. Meanwhile, the information processing apparatus may be provided with two or more stages of low power states in which power consumption is lower than power consumption in a normal operating state. In general, the lower the power consumption of the system state, the longer the return time to the normal operating state. Therefore, the two or more stages of low power states may be selectively used depending on whether emphasis is on shortening the return time or reducing the power consumption.

For example, Japanese Unexamined Patent Application Publication No. 2015-49808 discloses an information processing apparatus in which power is supplied from a battery, and when the information processing apparatus is in a low power state in which a remaining capacity of the battery is equal to or less than a predetermined threshold, a portion of a memory is set to an non-operational standby mode with low power consumption and when the information processing apparatus is no longer in the low power state, the standby mode of the battery is released.

Japanese Unexamined Patent Application Publication No. 2019-220101 discloses an information processing apparatus that enters a first sleep state when transition is performed from an active state to an idle state, that transitions to a second sleep state having a longer return time to the active state than the first sleep state, in a case where there is no operation by a user for a first idle time when entering the first sleep state before a previously set scheduled use-end time and after a previously set scheduled use-start time, and that transitions to the second sleep state, in a case where there is no operation by the user for a second idle time shorter than the first idle time when entering the first sleep state before the scheduled use-start time and after the scheduled use-end time. For example, modern standby and hibernation are applied as the first sleep state and the second sleep state, respectively.

### SUMMARY OF THE INVENTION

However, in the information processing apparatuses disclosed in Japanese Patent Application Laid-Open No. 2015-49808 and Japanese Patent Application Laid-Open No. 2019-220101, conditions for transition from the modern standby to a state with extremely low power consumption, such as the hibernation, are standardized. The information processing apparatus may not immediately return to a normal operating state because the power consumption is extremely low even though the user wants to use the information processing apparatus. Meanwhile, as the power consumption of the information processing apparatus is reduced, it is possible to maintain the modern standby state, which consumes more power than the hibernation, for a long period of time in a case where there is a certain remaining capacity of battery. Alternatively, it may be possible to maintain an active state for a certain period of duration even though the battery is not fully charged.

The present application has been made to solve the above-described problem, and an information processing apparatus according to one aspect of the present application includes: a computer system; and a power supply circuit, in which the power supply circuit is configured to supply power supplied from an external power source or a battery to the computer system, the computer system is configured to switch a system state among a normal state, a first low power state, and a second low power state, the first low power state is a state in which power consumption is lower than power consumption in the normal state, the second low power state is a state in which power consumption is lower than the power consumption in the first low power state, and the computer system is configured to determine a setting value for a decrease in remaining capacity such that the setting value increases as the remaining capacity of the battery increases when starting the first low power state, and change the system state to the second low power state when the first low power state continues until a decrease amount from the remaining capacity at the start of the first low power state reaches the setting value.

In the information processing apparatus, the computer system may be configured to determine the setting value to be equal to or greater than a predetermined lower limit value.

In the information processing apparatus, the computer system may be configured to determine, as the setting value, a larger value out of a difference between the remaining capacity at the start of the first low power state and a predetermined target, and the lower limit value.

In the information processing apparatus, the target may be equal to or greater than 50% and equal to or less than 70% of a capacity of the battery.

In the information processing apparatus, the first low power state may be modern standby, and the second low power state may be hibernation.

In the information processing apparatus, the power supply circuit may be configured to, when power is supplied from the external power source, store surplus power left unconsumed out of the power in the battery, and when power is not supplied from the external power source, power discharged from the battery may be supplied to the computer system.

A control method according to another aspect of the present application is a control method for an information processing apparatus including a computer system, and a power supply circuit configured to supply power supplied from an external power source or a battery to the computer system, in which the computer system is configured to switch a system state among a normal state, a first low power state, and a second low power state, the first low power state is a state in which power consumption is lower than power consumption in the normal state, and the second low power state is a state in which power consumption is lower than the power consumption in the first low power state, the control method including causing the information processing apparatus to execute: a step of determining a setting value for a decrease in remaining capacity such that the setting value increases as the remaining capacity of the battery increases when starting the first low power state; and a step of changing the system state to the second low power state when the first low power state continues until a decrease amount from the remaining capacity at the start of the first low power state reaches the setting value.

The above-described aspects of the present application can increase an opportunity to use a battery immediately when there is a margin of a battery remaining capacity.

### BRIEF DESCRIPTION OF THE DRAWINGS

FIG. 1 is an external view illustrating an external configuration example of an information processing apparatus according to the present embodiment.
FIG. 2 is a schematic block diagram illustrating a hardware configuration example of the information processing apparatus according to the present embodiment.
FIG. 3 is a schematic block diagram illustrating a functional configuration example of the information processing apparatus according to the present embodiment.
FIG. 4 is an explanatory diagram illustrating a relationship between a standby budget and a system state.
FIG. 5 is a table illustrating a standby budget setting value according to the present embodiment.
FIG. 6 is a diagram illustrating a relationship between a standby budget setting value and a battery remaining capacity according to the present embodiment.
FIG. 7 is a flowchart illustrating an example of system state control according to the present embodiment.

### DETAILED DESCRIPTION OF THE INVENTION

First, a hardware configuration example of an information processing apparatus 1 according to an embodiment of the present application will be described with reference to the drawings. In the following description, a case in which the information processing apparatus 1 is mainly a laptop type PC (sometimes referred to as a "laptop PC" in the present application) will be described as an example.

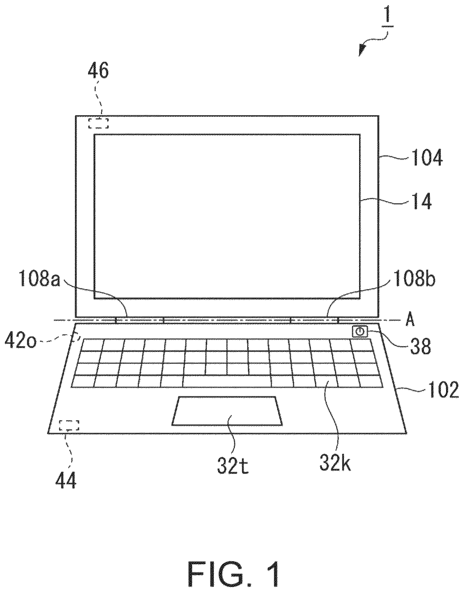

FIG. 1 is an external view illustrating an external configuration example of the information processing apparatus 1 according to the present embodiment.

The information processing apparatus 1 includes two chassis 102 and 104. Each of the chassis 102 and 104 has an oblong surface that is wider in width than in height, and has a flat shape that is thinner in thickness than in height. One side surface of the chassis 102 and one side surface of the chassis 104 are arranged in parallel in a width direction and engaged with each other using hinges 108a and 108b. One of the chassis 102 and 104 is connected to the other to be rotatably movable about a rotation axis A. That is, an angle between surfaces of the chassis 102 and 104 (hereinafter, sometimes referred to as an "opening angle") is made variable, so that both the chassis 102 and 104 are opened and closed. The opening angle of 0° or close to 0° (for example, 45° to 60°) corresponds to a state in which the chassis 102 and 104 are closed. The opening angle that is sufficiently large (for example, an angle greater than a range of 45° to 60°) corresponds to a state in which the chassis 102 and 104 are opened. In a state in which no external force is applied to the chassis 102 and 104, the opening angle is maintained constant.

The chassis 102 includes a lid sensor 44 at a location away from the rotation axis A. The lid sensor 44 detects the open/closed state of the chassis 102 and 104. In the example of FIG. 1, the lid sensor 44 includes a magnetic sensor. A permanent magnet 46 is installed in the chassis 104 at a position facing the lid sensor 44 in a state of being closed with the chassis 102. When the chassis 102 and 104 are in a closed state, the magnetic sensor detects a relatively strong magnetic field because the magnetic sensor is close to the permanent magnet. When the chassis 102 and 104 are in an open state, the detected magnetic field becomes weaker because the magnetic sensor is farther away from the permanent magnet. Therefore, the open/closed state of the chassis 102 and 104 is determined based on strength of the detected magnetic field.

On the surface of the chassis 102, a keyboard 32k, a touchpad 32t, and a power button 38 are disposed. An insertion port (outlet) 42o is installed on the side surface of the chassis 102 in the width direction. The insertion port 42o has a hollow portion into which a plug of an alternating current (AC) adapter 42 is insertable, and is fitted with the inserted plug to fix a position of the plug in contact with an electrode installed on an inner surface of the hollow portion. Direct current (DC) power is supplied to the information processing apparatus 1 from the AC adapter 42 via the plug inserted into the insertion port 42o.

The AC adapter 42 is supplied with AC power from a commercial power source and converts the supplied AC power into DC power with a constant voltage (for example, 3 V to 12 V) .

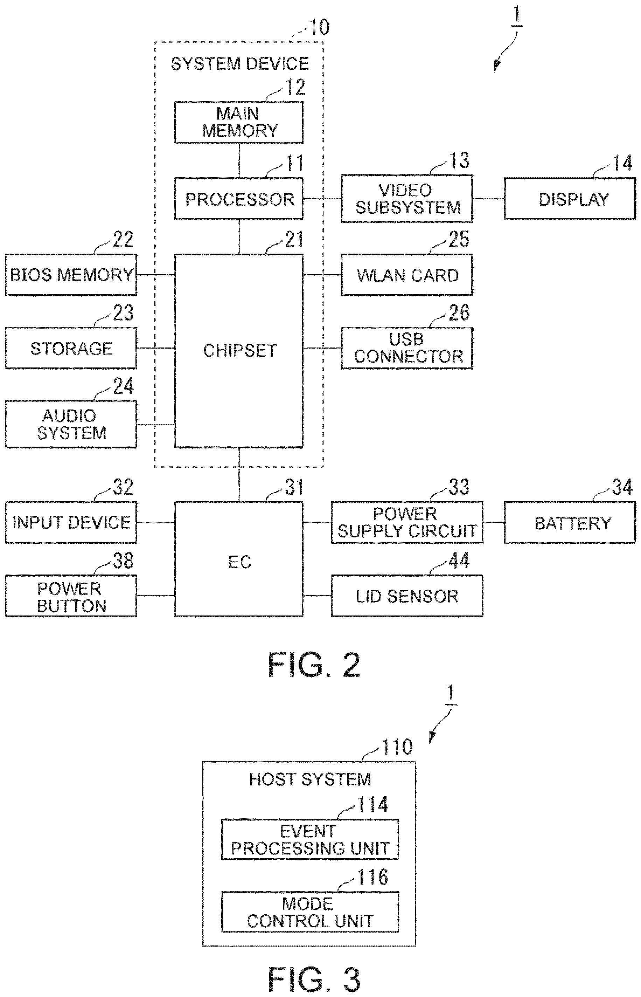

FIG. 2 is a schematic block diagram illustrating a hardware configuration example of the information processing apparatus 1 according to the present embodiment. The information processing apparatus 1 includes a processor 11, a main memory 12, a video subsystem 13, a display 14, a chipset 21, a basic input-output system (BIOS) memory 22, a storage 23, an audio system 24, a wireless local area network (WLAN) card 25, a universal serial bus (USB) connector 26, an embedded controller (EC) 31, an input device 32, a power supply circuit 33, a battery 34, a power button 38, and a lid sensor 44.

The processor 11 executes computing operations in accordance with various commands written in a program, and controls the overall operation of the information processing apparatus 1. The processor 11 may include, for example, one or two or more central processing units (CPUs) .

The main memory 12 is a writable memory that is used as a reading area for programs executed by the processor 11 or as a working area for writing processing data of executed programs. The main memory 12 includes, for example, one or two or more dynamic random access memory (DRAM) chips. The programs include, for example, an operating system (OS), a driver for controlling operations of peripheral devices, various service/utility programs (sometimes referred to as "utilities" in the present application), application programs (sometimes referred to as "apps" in the present application), and the like.

The processor 11, the main memory 12, and the chipset 21 are minimum hardware components of a host system 110 (see FIG. 3). In the present application, the devices constituting the host system 110 may be collectively referred to as a "system device 10". The host system 110 is a computer system that is a core of the information processing apparatus 1. The processor 11 executes a predetermined program and cooperates with the main memory 12 and other hardware to realize the functions of the host system 110. In the present application, the phrase "executing a program" or "execution of a program" includes the meaning of performing processing instructed by commands written in the program.

The video subsystem 13 is a subsystem for realizing functions related to image display. The video subsystem 13 includes a video controller (not illustrated). The video controller performs processing instructed by a drawing command input from the processor 11 and writes display data obtained by the processing into a video memory (not illustrated) provided in the video controller. The video controller reads the written display data from the video memory, and outputs the read display data to the display 14.

The display 14 displays various display screens based on the display data input from the video subsystem 13. The display 14 may be any type of display, such as a liquid crystal display (LCD) or an organic light emitting diode (OLED) display.

The chipset 21 is connected to one or a plurality of peripheral devices and controls the input and output of various data. The chipset 21 includes various input/output interfaces and connects corresponding devices thereto. The chipset 21 includes controllers corresponding to various input/output methods. The chipset 21 includes a controller related to, for example, any one or any combination of a USB, a serial advanced technology attachment (ATA), a serial peripheral interface (SPI) bus, a peripheral component interconnect (PCI) bus, a PCI-Express bus, a low pin count (LPC) bus, and the like. In FIG. 1, examples of the peripheral devices connected to the chipset 21 include the BIOS memory 22, the storage 23, the audio system 24, the WLAN card 25, the USB connector 26, and the EC 31.

System firmware such as the BIOS is pre-stored in the BIOS memory 22. The BIOS memory 22 may store firmware for controlling operations of the EC 31 and other devices. The BIOS memory 22 includes a rewritable non-volatile memory (for example, an electrically erasable programmable read only memory (EEPROM), a flash ROM, and the like).

The storage 23 is an auxiliary storage device that stores various programs and data executed by the processor 11. The storage 23 includes a rewritable non-volatile memory. The storage 23 may be any of a solid state drive (SSD), a hard disk drive (HDD), and the like.

The audio system 24 executes the input, output, and recording of audio data. The audio system 24 includes a speaker and emits sound based on audio data input to the audio system 24. The audio system 24 includes a microphone, collects sound that reach the audio system 24, and acquires audio data that represents the collected sound.

The WLAN (wireless LAN) card 25 is connected to wireless LAN and performs data communication with other devices directly or indirectly connected to the wireless LAN. The wireless LAN enables transmission and reception of various data between devices in accordance with a predetermined wireless communication method (for example, IEEE 802.11).

The USB connector 26 is a connector for connecting peripheral devices so as to input and output data to and from the peripheral devices in accordance with a USB standard so as to.

The EC 31 monitors an operating environment regardless of a system state of the host system, and monitors and controls states of various devices (peripheral devices, sensors, and the like). The EC 31 includes its own processor, memory, and input/output terminals, and is configured as a microcomputer. The input device 32, the power supply circuit 33, the power button 38, the lid sensor 44, and the like are connected to the EC 31 using the input/output terminals.

The EC 31 has a power control function and controls an operating state of the power supply circuit 33. The EC 31 controls the power supply circuit 33 based on, for example, the system state notified by the host system 110. The system states that the host system 110 can take include, for example, a normal operating state (sometimes referred to as an "active state" or a "normal state" in the present application) and two stages of low power states. The normal mode is the most active state (referred to as an S0 state) among a plurality of stages of system states defined by advanced configuration and power interface (ACPI). The low power state is a system state in which power consumption is lower than power consumption in the normal mode. In the low power state, the operation or function of at least a part (for example, the video subsystem 13 and the display 14) of the devices is stopped. In the low power state, the operation or function of the devices related to the user interface, such as the audio system 24 and the input device 32, may be stopped.

Examples of the two stages of low power states include modern standby and hibernation. The modern standby is an extended state of the S0 state and allows quicker return to the normal mode than hibernation. The modern standby is also referred to as an S0ix state. The hibernation is a system state in which power consumption is even lower than power consumption of modern standby. The hibernation is a resting state in which the power supply to the processor 11 and the main memory 12 is stopped and the operation of the host system 110 is stopped, and corresponds to an S4 state defined in the ACPI. In the hibernation, the operations of more peripheral devices than in the modern standby, for example, all the peripheral devices connected to the chipset 21, are stopped. The modern standby and the hibernation correspond to examples of the first low power state and the second low power state, respectively.

The input device 32 receives a user's operation, generates an operation signal according to the received operation, and outputs the generated operation signal to the EC 31. The input device 32 includes, for example, any of a keyboard, a touchpad, and a pointing device such as a mouse, or any combination thereof. The EC 31 outputs the operation signal received from the input device 32 to the host system 110 via the chipset 21.

The power supply circuit 33 is supplied with DC power from an AC adapter (not illustrated) via the insertion port 42o or from the battery 34. The power supply circuit 33 converts a voltage of the supplied DC power into a voltage required for the operation of each device constituting the information processing apparatus 1, and supplies power having the converted voltage to the device as a supply destination. The power supply circuit 33 includes a voltmeter that measures the voltage of the power supplied from the AC adapter, and notifies the EC 31 of the measured voltage as the supply voltage. The EC 31 determines whether or not power is supplied from the AC adapter based on the supply voltage notified by the power supply circuit 33. The EC 31 is capable of determining whether a power supply mode is an AC mode or a DC mode depending on whether the supply voltage notified by the power supply circuit 33 is equal to or greater than a predetermined supply voltage threshold. The AC mode is a power supply mode in which power supplied from the AC adapter is mainly consumed. The DC mode is a power supply mode in which power discharged from the battery 34 is mainly consumed. The EC 31 notifies the host system 110 of the determined power supply mode via the chipset 21.

The power supply circuit 33 includes, for example, a DC/DC converter, a charge/discharge unit, and the like. Under the control of the EC 31, the power supply circuit 33 controls the necessity of power supply to each device of the information processing apparatus 1. The power supply circuit 33 adjusts an amount of operating power supplied to a predetermined device (for example, the processor 11) among the devices that require power supply.

The charge/discharge unit supplies the remaining power, which is not consumed in each device, to the battery 34 when power is supplied from the AC adapter. In a case where power is not supplied from the AC adapter 42 or in a case where the power supplied from the AC adapter 42 is insufficient for the required power, the charge/discharge unit supplies the power discharged from the battery 34 to each device via the DC/DC converter. The power supply circuit 33 specifies a device to be operated based on a command from the EC 31, and supplies power required for the operation to the specified device.

In addition, the power supply circuit 33 includes a voltmeter that measures an electromotive force of the battery 34, and notifies the EC 31 of the electromotive force measured when no charging is being performed. Information indicating a relationship between the electromotive force and the remaining capacity is set in advance in the EC 31, and the amount of charge stored in the battery 34 is estimated as the remaining capacity based on the electromotive force notified by the power supply circuit 33. The EC 31 notifies the system device 10 of the estimated remaining capacity of the battery 34 via the chipset 21. The EC 31 may notify the system device 10 of the estimated remaining capacity of the battery 34 at regular intervals (for example, every 1 to 15 minutes), or may notify, each time the estimated remaining capacity of the battery 34 changes to a new remaining capacity discretized in a predetermined value range (for example, in increments of 1%), the system device 10 of the remaining capacity obtained by the change. As will be described below, the remaining capacity notified to the system device 10 is used to control the system state.

A secondary battery is used as the battery 34. The secondary battery is a rechargeable battery capable of being charged and discharged. The secondary battery is, for example, a lithium ion battery.

Each time the power button 38 is pressed, the power button 38 controls the state of power supply to the host system 110 of the information processing apparatus 1 to either power on or power off. When the power button 38 is pressed, the power button 38 outputs a press signal indicating the pressing to the EC 31.

The lid sensor 44 detects the open/closed state of the chassis 102 and 104. The lid sensor 44 generates a detection signal indicating the detected open/closed state and outputs the detection signal to the EC 31. The EC 31 specifies the open/closed state based on the detection signal input from the lid sensor 44. For example, in a case where the lid sensor 44 is a magnetic sensor, the EC 31 is capable of determining whether the chassis 102 and 104 is closed based on whether strength of a magnetic field indicated by the detection signal is equal to or greater than a predetermined strength threshold.

In the following description, a state in which the chassis 102 and 104 are opened may be referred to as an "open state" (lid open), and a state in which the chassis 102 and 104 are closed may be referred to as a "closed state" (lid closed). The EC 31 notifies the system device 10 of the determined open/closed state via the chipset 21. The open/closed state notified to the system device 10 may be used to control the system state.

Hereinafter, a functional configuration example of the information processing apparatus 1 according to the present embodiment will be described. FIG. 3 is a schematic block diagram illustrating a functional configuration example of the information processing apparatus 1 according to the present embodiment.

The host system 110 of the information processing apparatus 1 includes an event processing unit 114 and a mode control unit 116.

The event processing unit 114 acquires events related to the control of the system state of the host system 110. The event processing unit 114 acquires, for example, notification information from the EC 31. The notification information from the EC 31 includes the power supply mode, the remaining capacity of the battery 34, the open/closed state of the chassis 102 and 104, the input of the operation signals from the input device 32, and the like. The event processing unit 114 detects an operating status of the host system 110. Examples of elements of the operating status include an execution state of each program, power consumption of the processor 11, and the like. The event processing unit 114 notifies the mode control unit 116 of the acquired event.

The mode control unit 116 controls the system state (operation mode) based on one or both of the operating status and the usage environment of the information processing apparatus 1. In the mode control unit 116, for each pair of a certain system state 1 and another system state 2, transition conditions from the system state 1 as a transition source to the system state 2 as a transition destination are set in advance. The mode control unit 116 refers to the transition conditions from the current system state 1 to the system state 2, and when the current operating state or usage environment satisfies the transition conditions to the system state 2 based on the event notified by the event processing unit 114, the mode control unit 116 transitions the current system state 1 to the system state 2. The mode control unit 116 notifies the EC 31 of the system state determined by the control via the chipset 21. Specific examples of the system state of the host system 110 will be described below.

A standby budget is set in the mode control unit 116. The standby budget is an element of transition conditions from the modern standby to the hibernation. That is, the standby budget is one of parameters referred to when determining whether or not to transition the system state from the modern standby to the hibernation. More specifically, the standby budget corresponds to a decrease in remaining capacity from a remaining capacity of the battery 34 at start of the modern standby to a remaining capacity when the system state transitions to the hibernation.

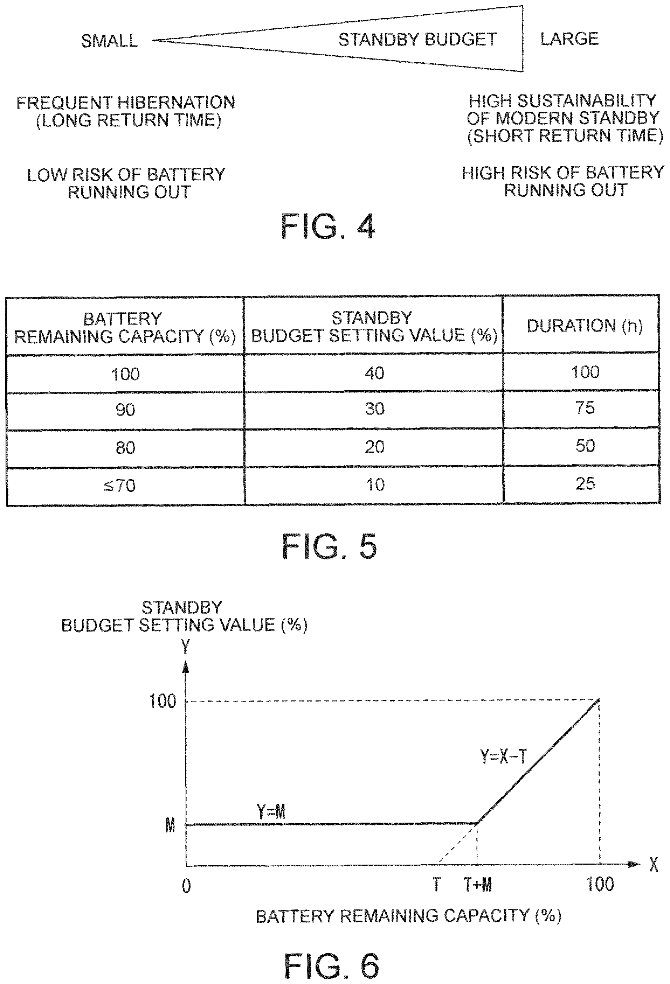

The standby budget setting value is set to be larger as the remaining capacity of the battery 34 at the start (entry) of the modern standby (hereinafter, sometimes referred to as "remaining capacity at the start") increases. In general, the smaller the standby budget setting value, the more likely it is to transition to the hibernation frequently, and the larger the standby budget setting value, the more likely it is to maintain the modern standby (see FIG. 4). When the system state transitions to the hibernation, the risk of the battery 34 running out of power (battery running out) decreases, whereas the disadvantage in that the return time to the normal mode increases becomes greater. Therefore, the transition to the hibernation is promoted when the remaining capacity of the battery 34 is low and there is a high need to conserve power consumption. On the other hand, when the remaining charge of the battery 34 is high and a high power consumption state is acceptable, the standby budget is set to a large value to increase the likelihood of maintaining the modern standby and to facilitate a quick return to the normal mode.

That is, when the modern standby is started by transition from another system state (for example, the normal mode), the mode control unit 116 specifies the remaining capacity of the battery 34 in response to the event notified by the event processing unit 114. The mode control unit 116 refers to setting information indicating a correspondence relationship between the preset remaining capacity of the battery 34 and the standby budget, and specifies the standby budget standby budget setting value corresponding to the specified remaining capacity at the start. The mode control unit 116 transitions the system state to the hibernation when the modern standby continues as the system state until a decrease amount from the remaining capacity of battery 34 notified by the event processing unit 114 reaches the specified standby budget setting value.

Next, an example of the system state according to the present embodiment will be described.

The power off is a state in which the power supplied from the external power source or the battery 34 is not consumed. In the power off state, the operation of most peripheral devices is stopped, except for a part of the devices with low power consumption. The EC 31 starts power supply to each device of the information processing apparatus 1 via the power supply circuit 33 when the press signal is input from the power button 38 in the power off state. When detecting start of power supply to the processor 11, the processor 11 reads the BIOS from the BIOS memory 22, loads the read BIOS into the main memory 12, and executes a start-up process (boot) according to the BIOS. In the start-up process, the processor 11 loads data that has been saved in the storage 23 into the main memory 12. Thereafter, the processor 11 starts up the OS, and after the OS has completed starting up, the processor 11 starts execution of device drivers related to the control of other devices. At this stage, the system state transitions to the normal mode (S0 state).

The hibernation (S4 state) is a resting state in which the operation of the system device 10 is stopped. In the hibernation, image data indicating the execution state of the program immediately before the transition to the hibernation is saved in the storage 23. Even in the hibernation, the operation of most peripheral devices is stopped, except for a part of the devices with low power consumption. When the press signal is input from the power button 38 in the hibernation state, the EC 31 transitions the system state to the normal mode in the same manner as in the power off state. At this time, the processor 11 resumes the execution of the program from the execution state immediately before the transition to the hibernation using the saved image data.

The EC 31 causes the system device 10 to execute a stop process (shutdown) when the system state is in the normal mode or the modern standby and a request from the OS or the press signal from the power button 38 is input. In the stop process, the mode control unit 116 saves data existing in the main memory 12 as a work area at that time to the storage 23. After the data saving is completed, the mode control unit 116 stops the processing by the applications, device drivers, and other programs that are being executed at that time. Thereafter, the processor 11 notifies the EC 31 of the completion of the stop process. The EC 31 stops the power supply to each device via the power supply circuit 33. At this time, the system state becomes power off.

When predetermined transition conditions to the modern standby are satisfied in the normal mode, the mode control unit 116 transitions the system state to the modern standby (S0ix state). Examples of the transition conditions from the normal mode to the modern standby include events such as the display screen remaining unchanged for a certain time (for example, 3 to 10 minutes) or longer without detecting any operation signal from the input device 32, the absence of any application to be executed in response to the operation, and the change in open/closed state of the chassis 102 and 104 from the open state to the closed state. In the modern standby, in addition to the EC 31, a part of the peripheral devices, such as the storage 23 and the WLAN card 25, may continue to operate. In addition, the input device 32 may be operated, and the event processing unit 114 may wait for the operation signal from the input device 32 via the EC 31 and the chipset 21.

When predetermined transition conditions to the hibernation are satisfied in the modern standby, the mode control unit 116 transitions the system state to the hibernation (S4 state). In this case, the mode control unit 116 saves image data existing in the main memory 12 as a work area at that time to the storage 23. After the data saving is completed, the mode control unit 116 stops the processing by the applications, device drivers, and other programs that are being executed at that time. Thereafter, the processor 11 notifies the EC 31 of the completion of the stop process. The EC 31 stops the power supply to each device via the power supply circuit 33.

The transition conditions from the modern standby to the hibernation include the decrease amount in battery remaining capacity from the start of the modern standby being equal to or greater than the standby budget setting value as described above. In addition, any one item or any combination of the following items may be applied as the transition conditions: when the modern standby continues for a certain time (for example, 10 to 30 minutes) or longer, when the current time point reaches a preset resting time, when sleep is instructed by the operation signal, when the remaining capacity of the battery 34 is equal to or less than a predetermined limit value, and when an actual measurement value of the power consumption of the information processing apparatus 1 is equal to or less than a predetermined reference value of the power consumption.

When predetermined transition conditions to the normal mode are satisfied in the modern standby, the mode control unit 116 transitions the system state to the normal mode. Examples of the transition conditions from the modern standby to the normal mode include events such as the input of the operation signal from the input device 32, the input of the press signal from the power button 38, and the change in open/closed state of the chassis 102 and 104 from the closed state to the open state.

The mode control unit 116 may apply transition conditions defined in advance in the OS or other programs.

Next, an example of setting the standby budget will be described. FIG. 5 is a table illustrating the standby budget setting value according to the present embodiment. FIG. 5 illustrates the standby budget setting value and the duration for each battery remaining capacity at the start of the modern standby. The battery remaining capacity and the standby budget setting value are expressed as a percentage (%) of the capacity of the battery 34. The duration is a time until the decrease amount in battery remaining capacity from the remaining capacity at the start reaches the standby budget setting value while the system state of the modern standby continues. Note that, in the example of FIG. 5, the capacity of the battery 34 is assumed to be 50 Wh, and the power consumption of the information processing apparatus 1 in the modern standby is assumed to be 200 mW.

The standby budget setting values illustrated in FIG. 5 are set to be larger overall as the battery remaining capacity at the start of the modern standby increases. For example, the standby budget setting values are set to 20%, 30%, and 40% for battery remaining capacities of 80%, 90%, and 100%, respectively. In a case where the capacity of the battery 34 is assumed to be 50 Wh and the power consumption in the modern standby is assumed to be 200 mW, the durations with respect to these standby budget setting values are 100 h (approximately 4 days), 75 h (approximately 3 days), and 50 h (approximately 2 days).

A lower limit may be set for the standby budget setting value. In the example of FIG. 5, the standby budget setting value is set to 10% as the lower limit for the battery remaining capacity of 70% or less. By setting the lower limit to the standby budget setting value, the transition to the hibernation is avoided immediately after the start of the modern standby even when the battery remaining capacity is low, thereby securing (maximizing) as many opportunities as possible to quickly return to the normal mode.

However, in a case where the battery remaining capacity falls below a predetermined lower limit value, it is not practical to continue operating the information processing apparatus 1 in the normal mode by consuming power supplied from the battery 34. The lower limit value of the battery remaining capacity is set to a value (for example, 3% to 8%) smaller than the lower limit of the standby budget.

Therefore, when the system state is in the normal mode or the modern standby and the battery remaining capacity is less than the limit value, the mode control unit 116 transitions the system state to the hibernation.

Setting information indicating the standby budget setting value for each battery remaining capacity is set in the mode control unit 116 as information indicating a transition condition related to a state transition from the modern standby to the hibernation. As illustrated in FIG. 5, the setting information may be represented by a data table, or may be represented as a parameter of a function for deriving the standby budget setting value from the battery remaining capacity. A relationship between the battery remaining capacity X and the standby budget setting value Y illustrated in FIG. 6 is expressed as Y = X - T when X is equal to or greater than T + M and equal to or less than 100%, and the relationship is expressed as T = M when X is equal to or greater than 0% and equal to or less than T + M. In this case, a target T and a lower limit M are parameters. The target corresponds to a reference value of the battery remaining capacity in a case where the system state transitions from the modern standby to the hibernation, when the battery remaining capacity X is equal to or greater than T + M.

In the examples of FIGS. 5 and 6, the target T and the lower limit M are 60% and 10%, respectively, but are not limited to this. The target T and lower limit M may be appropriately adjusted depending on the designed battery life and the user's psychology. Typically, the target T and the lower limit M are approximately 50% to 70% and 5% to 15%, respectively.

In the examples of FIGS. 5 and 6, a lower limit is set for the standby budget when the battery remaining capacity is equal to or less than a first threshold (for example, 70%). When the battery remaining capacity is equal to or greater than a second threshold, an upper limit may be set for the standby budget. The second threshold is set to a value (for example, 85% to 95%) greater than the first threshold value. In this case, the duration of the modern standby is controlled so that the decrease amount in battery remaining capacity falls within the upper limit of the standby budget.

In addition, a rate of change of standby budget setting value Y with respect to the battery remaining capacity X is not limited to 1 and may be a value greater than 0 and less than 1, for example, 0.5.

The function that gives the relationship between the battery remaining capacity X and the standby budget setting value Y is not limited to the linear function illustrated in FIG. 6. For example, a function that gives a function value asymptotically approaching the lower limit M as X approximates 0% may be used. In a case where an upper limit is set for the standby budget, a function that gives a function value asymptotically approaching the upper limit as X approximates 100% may be used. As such a function, for example, a sigmoid function, an arc tangent function, or the like can be applied.

The function that gives the standby budget setting value Y is not limited to a continuous function as long as the function is a function that gives a larger function value as the battery remaining capacity X increases, and may be a discrete function. That is, different constant values may be associated with each of a plurality of (at least two or more) value ranges of the battery remaining capacity X as the standby budget setting value Y.

The parameters of the standby budget (the target T and the lower limit M in the examples of FIGS. 5 and 6) may be set by the user's operation. In this case, the host system 110 displays a setting screen on the display 14 and sets the indicated value as a parameter for the setting item indicated by the operation signal input from the input device 32.

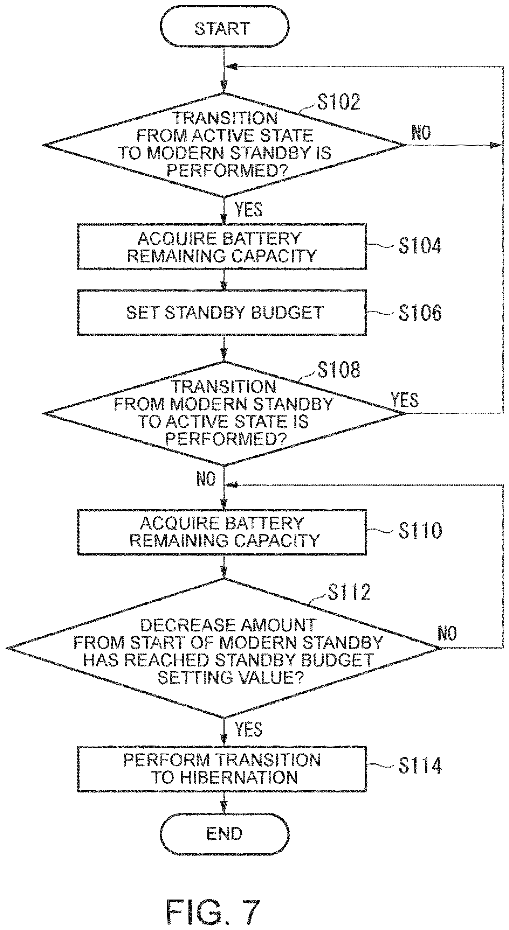

Next, an example of the system state control according to the present embodiment will be described. FIG. 7 is a flowchart illustrating an example of the system state control according to the present embodiment. The process illustrated in FIG. 7 starts when the system state of the host system 110 is in the active state, and includes a process until the system state transitions to the hibernation.

(Step S102) The mode control unit 116 determines whether or not the current operating state or usage environment satisfies the transition conditions from the active state to the modern standby. In a case where it is determined that the conditions are satisfied (YES in step S102), the process proceeds to step S104. In a case where it is determined that the conditions are not satisfied (NO in step S102), the process of step S102 is repeated.

(Step S104) The mode control unit 116 acquires information on the battery remaining capacity notified by the EC 31 via the chipset 21 and the event processing unit 114. The battery remaining capacity notified at that point corresponds to the remaining capacity at the start.

(Step S106) The mode control unit 116 refers to the preset setting information and specifies the standby budget standby budget setting value corresponding to the acquired battery remaining capacity.

(Step S108) The mode control unit 116 determines whether or not the current operating state or usage environment satisfies the transition conditions from the modern standby to the active state. In a case where it is determined that the conditions are satisfied (YES in step S108), the process returns to step S102. In a case where it is determined that the conditions are not satisfied (NO in step S108), the process proceeds to step S110. (Step S110) The mode control unit 116 acquires information on the battery remaining capacity notified by the EC 31 via the chipset 21 and the event processing unit 114.

(Step S112) The mode control unit 116 calculates the decrease amount in battery remaining capacity by subtracting the latest battery remaining capacity from the remaining capacity at the start. The mode control unit 116 determines whether or not the calculated decrease amount has reached the specified standby budget setting value. In a case where it is determined that the specified standby budget setting value has been reached (YES in step S112), the process proceeds to step S114. In a case where it is determined that the specified standby budget setting value has not been reached (NO in step S112), the process returns to step S110.

(Step S114) The mode control unit 116 transitions the system state of the host system 110 from the modern standby to the hibernation. Here, the mode control unit 116 saves data existing in the main memory 12 at that time to the storage 23, and after the data saving is completed, the mode control unit 116 stops the processing by the applications, device drivers, and other programs that are being executed at that time. Thereafter, the processor 11 notifies the EC 31 of the completion of the stop process. The EC 31 stops the power supply to each device via the power supply circuit 33. Thereafter, the process of FIG. 7 ends.

In the above description, the information processing apparatus 1 is not limited to a laptop PC and may be realized as a portable electronic device in different forms, such as a tablet PC or a 2-in-1 PC.

In addition, the first low power state and the second low power state are not limited to the modern standby and the hibernation, respectively. The second low power state need only be a system state in which the power consumption of the host system 110 is lower than the power consumption in the first low power state, that is, a system state in which it takes more time to return to the normal state. For example, the first low power state and the second low power state may be an S3 state and an S4 state defined in the ACPI, respectively.

As described above, the information processing apparatus 1 according to the present embodiment includes the computer system (for example, the host system 110) and the power supply circuit 33, in which the power supply circuit 33 supplies power from the external power source or the battery 34 to the computer system. The computer system is configured to switch the system state among the normal state (for example, the active state), the first low power state, and the second low power state. The first low power state is a state in which the power consumption is lower than the power consumption in the normal state (for example, the active state), and the second low power state is a state in which the power consumption is lower than the power consumption in the first low power state. The computer system determines the setting value for the decrease in remaining capacity (for example, the standby budget) such that the setting value increases as the remaining capacity of the battery 34 increases when starting the first low power state. The computer system changes the system state to the second low power state when the first low power state continues until the decrease amount from the remaining capacity at the start of the first low power state reaches the setting value.

The first low power state may be, for example, the modern standby, and the second low power state may be the hibernation.

With this configuration, the greater the remaining capacity of the battery 34, the larger the value set as the setting value for the decrease in remaining capacity. Therefore, when the battery 34 has a large remaining capacity, the elapsed time from the start of the first low power state is lengthened to suppress the transition to the second low power state, so that it is possible to increase the opportunity to quickly return to the normal state and to use the information processing apparatus 1.

In addition, the computer system may determine the setting value for the decrease in remaining capacity to be equal to or greater than a predetermined lower limit value.

With this configuration, the setting value for the decrease in remaining capacity is set to be equal to or greater than the predetermined lower limit value, so that the transition to the second low power state is avoided immediately after the start of the first low power state. Therefore, the first low power state continues, thereby securing the opportunity to quickly return to the normal state.

In addition, the computer system may determine, as the setting value for the decrease in remaining capacity, a larger value out of a difference between the remaining capacity of the battery 34 at the start of the first low power state and a predetermined target, and the predetermined lower limit value.

With this configuration, in a case where the remaining capacity of the battery 34 at the start of the first low power state is large and the difference between the remaining capacity and the predetermined target exceeds the predetermined lower limit value, the difference between the remaining capacity of the battery 34 and the target is determined as the setting value for the decrease in remaining capacity, and in a case where the remaining capacity of the battery 34 at the start of the first low power state is small and the difference between the remaining capacity and the target is equal to or less than the predetermined lower limit value, the predetermined lower limit value is determined as the setting value for the decrease in remaining capacity. Therefore, the setting value for the decrease in remaining capacity is determined to be equal to or greater than the predetermined lower limit value.

In addition, the predetermined target may be equal to or greater than 50% and equal to or less than 70% of the capacity of the battery 34.

With this configuration, in a case where the remaining capacity of the battery 34 at the start of the first low power state is large and the difference between the remaining capacity and the predetermined target exceeds the predetermined lower limit value, the first low power state continues until the remaining capacity of the battery 34 reaches the target, thereby securing the opportunity to quickly return to the normal state, and in a case where the remaining capacity of the battery 34 is lower than the target, the transition to the second low power state is performed, thereby maintaining the remaining capacity of the battery 34. By setting the target to be equal to or greater than 50% and equal to or less than 70% of the capacity of the battery 34, a desired duration of the battery 34 is secured depending on the design or user's psychology.

In addition, the power supply circuit 33 may supply, when power is supplied from the external power source, store surplus power left unconsumed out of the power in the battery 34, and when power is not supplied from the external power source, power discharged from the battery 34 may be supplied to the computer system.

With this configuration, the surplus power left unconsumed out of the power supplied from the external power source is stored in the battery 34. As the remaining capacity of the battery 34 increases due to the storage of the surplus power, the setting value for the decrease in remaining capacity increases. By increasing the duration of the first low power state, it is possible to increase the opportunity to quickly return to the normal state.

Although the embodiment of the present invention has been described in detail with reference to the drawings, the specific configurations are not limited to the above-described embodiment, and the present application includes designs and the like within a scope not departing from the spirit of the invention. It is possible to optionally combine the configurations described in the above-described embodiment.

### Description of Symbols

- 1: information processing apparatus
- 10: system device
- 11: processor
- 12: main memory
- 13: video subsystem
- 14: display
- 21: chipset
- 22: BIOS memory
- 23: storage
- 24: audio system
- 25: WLAN card
- 26: USB connector
- 31: EC
- 32: input device
- 32k: keyboard
- 32t: touchpad
- 33: power supply circuit
- 34: battery
- 38: power button
- 42o: insertion port
- 44: lid sensor
- 102, 104: chassis
- 108a, 108b: hinge
- 110: host system
- 114: event processing unit
- 116: mode control unit

## Claims

1. An information processing apparatus comprising:
a computer system; and
a power supply circuit,
wherein the power supply circuit is configured to supply power supplied from an external power source or a battery to the computer system,
the computer system is configured to switch a system state among a normal state, a first low power state, and a second low power state,
the first low power state is a state in which power consumption is lower than power consumption in the normal state,
the second low power state is a state in which power consumption is lower than the power consumption in the first low power state, and
the computer system is configured to
determine a setting value for a decrease in remaining capacity such that the setting value increases as the remaining capacity of the battery increases when starting the first low power state, and
change the system state to the second low power state when the first low power state continues until a decrease amount from the remaining capacity at the start of the first low power state reaches the setting value.

2. The information processing apparatus according to claim 1,
wherein the computer system is configured to determine the setting value to be equal to or greater than a predetermined lower limit value.

3. The information processing apparatus according to claim 2,
wherein the computer system is configured to determine, as the setting value, a larger value out of a difference between the remaining capacity at the start of the first low power state and a predetermined target, and the lower limit value.

4. The information processing apparatus according to claim 1,
wherein the first low power state is modern standby, and
the second low power state is hibernation.

5. The information processing apparatus according to claim 1,
wherein the power supply circuit is configured to, when power is supplied from the external power source, store surplus power left unconsumed out of the power in the battery, and
when power is not supplied from the external power source, power discharged from the battery is supplied to the computer system.

6. A control method for an information processing apparatus including a computer system, and a power supply circuit configured to supply power supplied from an external power source or a battery to the computer system, in which the computer system is configured to switch a system state among a normal state, a first low power state, and a second low power state, the first low power state is a state in which power consumption is lower than power consumption in the normal state, and the second low power state is a state in which power consumption is lower than the power consumption in the first low power state, the control method comprising:
determining a setting value for a decrease in remaining capacity such that the setting value increases as the remaining capacity of the battery increases when starting the first low power state; and
changing the system state to the second low power state when the first low power state continues until a decrease amount from the remaining capacity at the start of the first low power state reaches the setting value.

7. The control method according to claim 6, further comprising determining the setting value to be equal to or greater than a predetermined lower limit value.

8. The control method according to claim 7, further comprising determining, as the setting value, a larger value out of a difference between the remaining capacity at the start of the first low power state and a predetermined target, and the lower limit value.

9. The control method according to claim 6,
wherein the first low power state is modern standby, and
the second low power state is hibernation.

10. The control method according to claim 6, further comprising:
when power is supplied from the external power source, storing surplus power left unconsumed out of the power in the battery, and
when power is not supplied from the external power source, supplying power discharged from the battery to the computer system.
